# EUROPÄISCHE PATENTSCHRIFT

(11) **EP 0 725 516 B1**
(45) Veröffentlichungstag und Bekanntmachung des Hinweises auf die Patenterteilung: **03.07.2002**
(21) Anmeldenummer: 96101455.2
(22) Anmeldetag: 02.02.1996
(51) Int. Cl.: H04L 12/42, H04L 12/24, B60R 16/02

(54) **Verfahren zur Bestimmung der Position eines Netzteilnehmers in einem Netzwerk**
Method for determining the position of a participant in a network
Procédé de détermination de position d'un participant dans un réseau

(30) Priorität: 02.02.1995 DE 19503206
(43) Veröffentlichungstag der Anmeldung: 07.08.1996
(73) Patentinhaber: BECKER GmbH, D-76307 Karlsbad (DE)
(72) Erfinder: Stiegler, Andreas, D-76307 Karlsbad (DE); Heck, Patrick, D-76448 Durmersheim (DE); Hetzel, Herbert, D-76356 Weingarten (DE)
(74) Vertreter: Patentanwälte Westphal, Mussgnug & Partner

(56) Entgegenhaltungen:
- EP-A- 0 436 932
- EP-A- 0 519 111
- US-A- 3 564 145

## Beschreibung

Die Erfindung betrifft ein Verfahren zur Bestimmung der Position eines Netzteilnehmers in einem eine Ringstruktur aufweisenden und mehrere Netzteilnehmer miteinander verbindenden Netzwerk, bei dem ein Netzteilnehmer als Master eingesetzt ist.

Die vorliegende Erfindung zeigt ein Netzwerk mit ringförmiger Architektur, bei dem die Datenquellen und Datensenken bildenden Teilnehmer durch eine einzige Datenleitung verbunden sind. Über diese Datenleitung werden die Quell- und Steuerdaten in einem zu einem Taktsignal synchronen kontinuierlichen Datenstrom übertragen. Das Taktsignal wird von einem einzigen Teilnehmer, im folgenden Master genannt, generiert. Alle anderen Teilnehmer, im folgenden Slave genannt, synchronisieren sich auf dieses Taktsignal. Davon zu unterscheiden sind rein asynchrone Datenübertragungsverfahren, wie paketorientierte Datenübertragungsverfahren z.B. ATM-Verfahren oder Tokenverfahren.

Bei einem ringförmigen Netzwerk der genannten Art kommt es oftmals vor, daß mehrere physikalisch identische Netzteilnehmer miteinander verbunden werden. Da diese Netzteilnehmer dann zwangsläufig auch jeweils identische Kennzeichnungen aufweisen, können diesen physikalisch identischen Netzteilnehmern Informationen jeweils nur gemeinsam übermittelt werden. Eine gezielte Ansprache einzelner dieser Netzteilnehmer mit individuellen, selektiven Daten ist nicht möglich.

Um dieses Problem zu umgehen, ist es üblich, vor Inbetriebnahme des Netzwerks den einzelnen physikalisch identischen Netzteilnehmern durch einen manuellen Eingriff, beispielsweise das Verstellen von Jumpern verschiedene Eigenschaften, insbesondere Adressen zuzuweisen. Eine Anordnung dieser Art wird in der US-A-3 564 145 vorgestellt. Es ist eine serielle Verbindung zu mehreren Netzteilnehmern beschrieben, wobei an den jeweiligen Enden jeweils ein Zentralrechner angeordnet ist, so daß eine ringförmige Anordnung gebildet wird. Derartige Systeme sind jedoch umständlich und unwirtschaftlich.

In der EP-A-0 519 111 ist ein Verfahren beschrieben, welches ohne einen manuellen Eingriff auskommt. Es wird ein Ringnetz mit mehreren Netzteilnehmern in dezentraler Struktur vorgestellt. Einer der Netzteilnehmer ist als Master eingesetzt, welcher einen Takt für das Ringnetz vorgibt. Ein beliebiges Ansprechen einzelner Netzteilnehmer ist nicht vorgesehen, so daß ein derartiges System nur einen begrenzten Anwendungsbereich findet.

Die EP-A-0 436 932, von der die Erfindung ausgeht, offenbart ein Verfahren zur Bestimmung der Position eines Netzteilnehmers in einem eine Ringstruktur aufweisenden und mehrere Netzteilnehmer miteinander verbindenden Netzwerk, bei dem ein Netzteilnehmer als Master eingesetzt ist. Bei diesem Verfahren generiert der Master zu Beginn des Netzwerkbetriebes eine eine Teilnehmerpositionskennzeichnung darstellende Zahl und speichert diese intern ab. Daraufhin veranlaßt ausgehend vom Master jeder Netzteilnehmer den in der Ringstruktur unmittelbar nachfolgenden Netzteilnehmer zum Abspeichern einer ebenfalls jeweils eine Teilnehmerpositionskennzeichnung darstellenden Zahl, die gegenüber der jeweiligen eigenen Teilnehmerpositionskennzeichnung um eine Zahl N erhöht ist, bis auf diese Weise jedem Netzteilnehmer eine individuelle Positionskennzeichnung zugewiesen ist und der Master in Kenntnis der Struktur des ring-förmigen Netzwerkes jedem Teilnehmer anhand der individuellen Positionskennzeichnungen mit selektiven Daten versorgen kann.

Problematisch ist bei diesem Verfahren jedoch, daß es keine Sicherheit bei der Datenübertragung der die Teilnehmerpositionen kennzeichnenden Zahlen bietet. Wenn z.B. mehrere aufeinanderfolgende Bits verfälscht sind, was häufiger vorkommt als die Verfälschung einzelner Bits, ist die eine Teilnehmerposition kennzeichnende Zahl bei dem aus der EP-A-0436 932 bekannten Verfahren verfälscht.

Der Erfindung liegt die Aufgabe zugrunde, ein Verfahren der eingangs genannten Art so auszubilden, daß physikalisch identische Netzteilnehmer mit möglichst geringem Aufwand selektiv ansprechbar sind und daß dabei eine hohe Sicherheit bei der Datenübertragung gewährleistet ist.

Diese Aufgabe wird erfindungsgemäß gelöst durch ein Verfahren zur Bestimmung der Position eines Netzteilnehmers mit den kennzeichnenden Merkmalen des Anspruchs 1. Vorteilhafte Ausführungen der Erfindung sind in den Unteransprüchen angegeben.

Bei dem erfindungsgemäßen Verfahren speichert der als Master eingesetzte Netzteilnehmer zu Beginn des Netzwerkbetriebes eine bestimmte Zahl ab, die im folgenden die physikalische Position des Masters darstellt. Daraufhin erhöht der Master diese Zahl beispielsweise um 1 und sendet diese erhöhte Zahl an den in der Ringstruktur unmittelbar auf den Master folgenden Netzteilnehmer. Dieser Netzteilnehmer empfängt diese um 1 erhöhte Zahl und speichert diese intern ab, wobei diese abgespeicherte Zahl dann die physikalische Position dieses auf den Master folgenden Netzteilnehmers darstellt.

Der auf den Master folgende Netzteilnehmer erhöht die abgespeicherte Zahl dann wiederum beispielsweise um 1 und sendet diese Zahl an den auf ihn folgenden Netzteilnehmer, woraufhin sich der beschriebene Vorgang wiederholt.

Nachdem auf diese Weise in jedem im Netzwerk vorhandenen Netzteilnehmer eine Zahl bzw. eine Positionskennzeichnung abgespeichert wurde, ist in allen - auch den physikalisch identischen - Netzteilnehmern jeweils eine individuelle Positionskennzeichnung abgespeichert, wobei im beschriebenen Beispiel die Positionskennzeichnungen jeweils aufeinanderfolgender Netzteilnehmer immer genau um 1 differieren. Falls in einem Netzwerk beispielsweise vier Netzteilnehmer vorhanden sind, von denen einer als Master eingesetzt ist, hätte der Master gemäß dem beschriebenen Beispiel die Positionskennzeichnung Null und die auf ihn folgenden Netzteilnehmer die Positionskennzeichnungen 1, 2 und 3.

Der Master kennt die Struktur des Ringes und die physikalischen Eigenschaften jedes Teilnehmers, was in Verbindung mit den Positionskennzeichnungen eine eindeutige Zuordnung der Eigenschaften der Teilnehmer zur Positionskennzeichnung ermöglicht und damit auch bei physikalisch identischen Teilnehmern eine selektive, individuelle Zuführung der Daten ermöglicht.

Während der Zuweisung der Positionsdaten zu den einzelnen Netzteilnehmern ist nunmehr erfindungsgemäß vorgesehen, die Daten zwischen den Netzteilnehmern unidirektional jeweils in einem vorgegebenen Bitgruppenformat zu übertragen. Dabei werden die die Positionskennzeichnungen darstellenden Zahlen jeweils an vorgegebenen Bit-Positionen aufeinanderfolgender Bitgruppen übertragen, so daß sich eine Positionskennzeichnung jeweils aus der Kombination bestimmter Bits mehrerer aufeinanderfolgender Bitgruppen ergibt.

Wenn also z.B. mehrere aufeinanderfolgende Bits verfälscht sind, was häufiger vorkommt als die Verfälschung einzelner Bits, ist die eine Teilnehmerposition kennzeichnende Zahl bei dem aus der EP-A-0519 111 bekannten Verfahren verfälscht, während sie bei der Erfindung infolge der Verteilung ihrer Bits auf mehrere Bitgruppen oder Rahmen korrekt ist.

Bei Anwendung des erfindungsgemäßen Verfahrens ist es ebenso möglich, daß der als Master eingesetzte Teilnehmer zu Beginn des Netzwerkbetriebs eine von Null verschiedene Zahl generiert und abspeichert und die nachfolgenden Netzteilnehmer eine jeweils um eine beliebige Zahl N, die sowohl positiv als auch negativ sein kann, erhöhte bzw. erniedrigte Zahl als individuelle Positionskennzeichnung abspeichern.

Um eine Übertragung der Positionskennzeichnungen in einem einheitlichen Datenformat zu ermöglichen, können bei einer bevorzugten Ausführungsform des erfindungsgemäßen Verfahrens die die Positionskennzeichnungen darstellenden Zahlen zwischen aufeinanderfolgenden Netzteilnehmern in Datenwörtern übertragen werden, deren Länge so bemessen ist, daß die größte übertragbare Zahl zumindest der Anzahl der maximal möglichen Netzteilnehmer entspricht. Die Länge der entsprechenden Datenwörter kann beispielsweise ein Byte betragen, was dann nach dem erfindungsgemäßen Verfahren letztendlich die Positionskennzeichnung von maximal 256 Netzteilnehmern ermöglicht.

Wie bereits erwähnt, kann das erfindungsgemäße Verfahren im Rahmen einer bevorzugten Anwendung bei der individuellen und gezielten Ansprache von Netzteilnehmern eingesetzt werden, die in einem Netzwerk zusammenwirken, das mehrere physikalisch identische Netzteilnehmer aufweist. Ein derartiger Anwendungsfall kann dann gegeben sein, wenn in einem stationären bzw. mobilen Kommunikationssystem, beispielsweise in einem Haushalt bzw. in einem Fahrzeug mehrere Hifi-Komponenten zusammenwirken und Audiosignale an mehrere, physikalisch identische Lautsprecherboxen gesendet werden.

Eine selektive individuelle Ansprache von beispielsweise vier Lautsprecherboxen kann in einem Fahrzeug wünschenswert sein, in dem die Boxen im vorderen und hinteren Bereich mit unterschiedlicher Klangregelung angesteuert werden sollen, um so beispielsweise einem unterschiedlichen Klangverhalten des Fahrzeugs Rechnung tragen zu können. Weiterhin sind beispielsweise die linken und rechten Boxen des Fahrzeugs unterschiedlich anzusteuern, da nur so ein in der Regel erwünschter Stereoeffekt erzielt werden kann.

Für eine solche selektive Ansteuerung von vier Lautsprecherboxen in einem Hifi-System ist es nötig, daß jeder einzelnen Lautsprecherbox eine individuelle Positionskennzeichnung zugewiesen wird, so daß sie auch mit einem individuellen Signal versorgt werden kann. Dies ist mit dem erfindungsgemäßen Verfahren auf einfache Weise möglich.

Schließlich ist das erfindungsgemäße Verfahren auf vorteilhafte Weise auch dazu geeignet, die Position einer aufgetretenen Leitungsstörung zu ermitteln. Diese Positionsermittlung stellt bei bisher bekannten Netzwerken ein Problem dar, da die Leitungsstörung zwar dem als Master eingesetzten Netzteilnehmer gemeldet werden kann, dem Master dann jedoch nicht bekannt ist, wo die Leitungsstörung aufgetreten ist.

Da gemäß dem erfindungsgemäßen Verfahren jeder Netzteilnehmer gewissermaßen fortlaufend numeriert ist, kann derjenige Netzteilnehmer, der aufgrund der aufgetretenen Leitungsstörung vom vorangehenden Netzteilnehmer keine Daten mehr empfängt, seine Positionskennzeichnung an den als Master eingesetzten Netzteilnehmer weitermelden. Auf diese Weise erfährt der Master, daß die aufgetretene Leitungsstörung zwischen dem seine Positionskennzeichnung meldenden Netzteilnehmer und dem ihm in der Ringstruktur vorangehenden Netzteilnehmer zu lokalisieren ist.

Auf diese Weise kann eine aufwendige und langwierige Fehlersuche, insbesondere bei einer schwer zugänglichen Verkabelung innerhalb eines Fahrzeuges auf einfache Weise vermieden und eine erforderliche Reparatur schneller und kostengünstiger ausgeführt werden.

Die Erfindung ist nicht auf die vorstehend beschriebenen Anwendungsfälle beschränkt sondern kann auch in beliebigen anderen Einsatzgebieten angewendet werden.

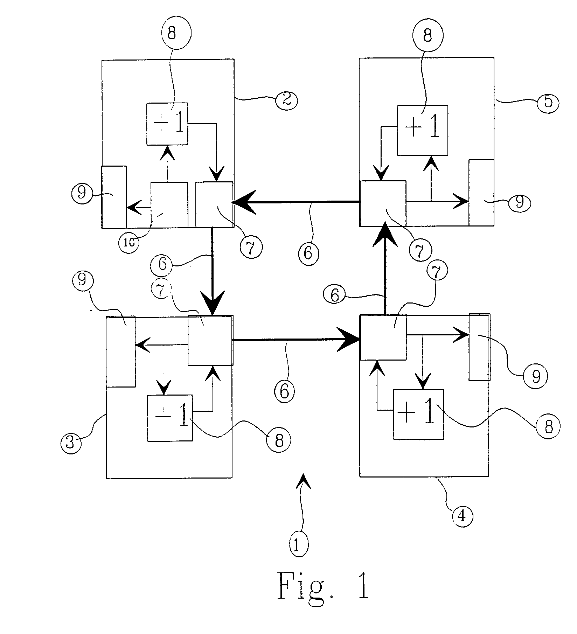

Die Erfindung wird im folgenden unter Bezugnahme auf die einzige Figur anhand eines Beispiels beschrieben; die Figur zeigt ein Blockschaltbild eines mittels eines erfindungsgemäßen Positionsbestimmungsverfahrens betreibbaren ringförmigen Netzwerks.

Das ringförmige Netzwerk 1 weist vier Netzteilnehmer 2, 3, 4, 5 auf, die über Datenleitungen 6 zu einer ringförmigen Struktur miteinander verbunden sind.

Jeder der Netzteilnehmer 2, 3, 4, 5 besitzt eine Eingangs-/Ausgangs-Schnittstelle 7, an die jeweils der in dem unidirektionalen ringförmigen Netzwerk vorangehende und nachfolgende Netzteilnehmer angeschlossen sind. Über die Schnittstellen 7 und die Datenleitungen 6 kommunizieren die einzelnen Netzteilnehmer 2, 3, 4, 5 miteinander.

Jeder Netzteilnehmer 2, 3, 4, 5 weist weiterhin einen Baustein 8 auf, der dazu geeignet ist, eine an seinen Eingang angelegte Zahl um 1 zu inkrementieren und diese inkrementierte Zahl über seinen Ausgang abzugeben.

Schließlich ist jeder Netzteilnehmer mit einem Speicherplatz 9 versehen, in dem eine individuelle Netzteilnehmer-Positionskennzeichnung speicherbar ist.

Der im Netzwerk 1 als Master eingesetzte Netzteilnehmer 2 ist mit einem Baustein 10 ausgerüstet, welcher zur Generierung einer Zahl, insbesondere von Null geeignet ist. Das beschriebene Netzwerk arbeitet bei seiner Inbetriebnahme wie folgt:

Der Baustein 10 im Netzteilnehmer 2 generiert die Zahl 0 und übergibt diese an den Speicherplatz 9, wo diese Zahl 0 als individuelle Positionskennzeichnung des Netzteilnehmers 2 permanent abgespeichert wird.

Zugleich sendet der Baustein 10 die generierte 0 auch an den Baustein 8, welcher die 0 um 1 inkrementiert und dann die Schnittstelle 7 über seinen Ausgang mit der inkrementierten Zahl, also mit 1 versorgt.

Über die Schnittstelle 7 des Netzteilnehmers 2 gelangt diese inkrementierte Zahl 1 zur Schnittstelle 7 des nachfolgenden Netzteilnehmers 3, von der aus sie im Speicherplatz 9 des Netzteilnehmers 3 als dessen individuelle Positionskennzeichnung abgelegt wird. Zugleich wird die über die Schnittstelle 7 des Netzteilnehmers 3 empfangene Zahl 1 im Baustein 8 des Netzteilnehmers 3 um 1 inkrementiert und als Zahl 2 über die Schnittstellen 7 der Netzteilnehmer 3, 4 an den Netzteilnehmer 4 gesandt.

Von der Schnittstelle 7 des Netzteilnehmers 4 gelangt die empfangene Zahl 2 in den Speicherplatz 9 des Netzteilnehmers 4, wo sie als dessen permanente Positionskennzeichnung abgespeichert wird. Zugleich wird diese Zahl 2 im Baustein 8 des Netzteilnehmers 4 wiederum um 1 inkrementiert und als Zahl 3 über die Schnittstelle 7 des Netzteilnehmers 4 und die Datenleitung 6 an die Schnittstelle 7 des Netzteilnehmers 5 gesandt.

Von der Schnittstelle 7 des Netzteilnehmers 5 gelangt die Zahl 3 dann in den Speicherplatz 9 des Netzteilnehmers 5, wo sie als dessen permanente Positionskennzeichnung abgespeichert wird.

Damit ist der Initialisierungsprozeß, bei dem jedem Netzteilnehmer 2, 3, 4, 5 eine individuelle Positionskennzeichnung zugewiesen wird, abgeschlossen.

Nach Abschluß dieser Initialisierungsphase besitzt der Netzteilnehmer 2 die Positionskennzeichnung 0, der Netzteilnehmer 3 die Positionskennzeichnung 1, der Netzteilnehmer 4 die Positionskennzeichnung 2 und der Netzteilnehmer 5 die Positionskennzeichnung 3. Über diese Positionskennzeichnungen ist jeder einzelne Netzteilnehmer, auch wenn physikalisch identische Netzteilnehmer im Netzwerk 1 vorhanden sein sollten, individuell ansprechbar.

Der Master kennt die physikalischen Eigenschaften der Teilnehmer und die physikalische Struktur des Ringes. Mit diesem Wissen und der Kenntnis der Positionskennzeichnungen kann der Master jedem Teilnehmer individuell die seinen Eigenschaften angepaßten Daten zukommen lassen. Damit spricht er den Teilnehmer 2 mit anderen Daten an als den Teilnehmer 3, auch wenn die physikalischen Eigenschaften identisch sind.

Die Netzteilnehmer 2, 3, 4, 5 könnten auch alle masterfähig ausgebildet sein, das heißt bezogen auf die Erfindung, daß jeder dieser Netzteilnehmer 2, 3, 4, 5 einen Baustein zur Generierung einer Zahl aufweisen könnte. In diesem Fall könnte jeder dieser Netzteilnehmer 2, 3, 4, 5 als Master eingesetzt werden. Dies ist in der Praxis sinnvoll, da dann immer derjenige Netzteilnehmer als Master arbeiten kann, welcher zuerst eingeschaltet wird.

Wie bereits erwähnt, kann das erfindungsgemäße Verfahren auch dazu verwendet werden, festzustellen, an welcher Position in einem unidirektionalen, ringförmigen Netzwerk eine Leitungsstörung aufgetreten ist.

Wenn beispielsweise zwischen den Netzteilnehmern 3 und 4 eine Leitungsstörung auftritt, dann empfängt der Netzteilnehmer 4 von dem Netzteilnehmer 3 keine Daten mehr. In diesem Fall meldet der Netzteilnehmer 4 über den Netzteilnehmer 5 seine Positionskennzeichnung an den Master 2.

Wenn der Master 2 die Positionskennzeichnung des Netzteilnehmers 4 (im vorliegenden Beispiel "2") gemeldet bekommt, dann ist er darüber informiert, daß zwischen den Netzteilnehmern 3 und 4 eine Leitungsstörung aufgetreten ist. Auf diese Weise läßt sich eine Leitungsstörung auf einfachste Weise mit minimalem Aufwand lokalisieren.

### Bezugszeichenliste:

- 1: ringförmiges Netzwerk
- 2: Netzwerkteilnehmer
- 3: Netzwerkteilnehmer
- 4: Netzwerkteilnehmer
- 5: Netzwerkteilnehmer
- 6: Datenleitung
- 7: Eingangs-/Ausgangs-Schnittstelle
- 8: Baustein zur Offsetbildung
- 9: Speicherplatz
- 10: Baustein Zahlengenerierung

## Patentansprüche

1. Verfahren zur Bestimmung der Position eines Netzteilnehmers (2, 3, 4, 5) in einem eine Ringstruktur aufweisenden und mehrere Netzteilnehmer (2, 3, 4, 5) miteinander verbindenden Netzwerk (1), bei dem ein Netzteilnehmer (2) als Master eingesetzt ist, wobei der Master (2) zu Beginn des Netzwerkbetriebes eine eine Teilnehmerpositionskennzeichnung darstellende Zahl generiert und intern abspeichert, woraufhin ausgehend vom Master (2) jeder Netzteilnehmer (3, 4, 5) den in der Ringstruktur unmittelbar nachfolgenden Netzteilnehmer (3, 4, 5) zum Abspeichern einer ebenfalls jeweils eine Teilnehmerpositionskennzeichnung darstellenden Zahl veranlaßt, die gegenüber der jeweiligen eigenen Teilnehmerpositionskennzeichnung um eine Zahl N erhöht ist, bis auf diese Weise jedem Netzteilnehmer (2, 3, 4, 5) eine individuelle Positionskennzeichnung zugewiesen ist und der Master in Kenntnis der Struktur des ringförmigen Netzwerkes jeden Teilnehmer anhand der individuellen Positionskennzeichnungen mit selektiven Daten versorgen kann,
**dadurch gekennzeichnet, daß die** Daten zwischen den Netzteilnehmern (2, 3, 4 5) unidirektional jeweils in einem vorgegebenen Bitgruppenformat übertragen werden, wobei während der Zuweisung der Teilnehmerpositionskennzeichnungen die die Positionskennzeichnungen darstellenden Zahlen jeweils an vorgegebenen Bit-Positionen aufeinanderfolgender Bitgruppen übertragen werden.

2. Verfahren nach Anspruch 1, **dadurch gekennzeichnet, daß** die vom Master (2) zu Beginn des Netzwerkbetriebes generierte Zahl gleich Null und die Zahl N gleich Eins ist.

3. Verfahren nach einem der vorhergehenden Ansprüche, **dadurch gekennzeichnet, daß** die die Positionskennzeichnungen darstellenden Zahlen zwischen aufeinanderfolgenden Netzteilnehmern (2, 3, 4, 5) in Datenwörtern übertragen werden, deren Länge so bemessen ist, daß die größte übertragbare Zahl zumindest der Anzahl der maximal möglichen Netzteilnehmer (2, 3, 4, 5) entspricht.

4. Verwendung des Verfahrens nach einem der vorhergehenden Ansprüche zur individuellen und gezielten Ansprache von Netzteilnehmern (2, 3, 4, 5) in einem mehrere physikalisch identische Netzteilnehmer (2, 3, 4, 5) aufweisenden Netzwerk (1).

5. Verwendung des Verfahrens nach einem der Ansprüche 1 bis 3 zur individuellen und gezielten Ansprache von Lautsprecherboxen in einem mehrere physikalisch identische Lautsprecherboxen und weitere Hifi-Komponenten aufweisenden Netzwerk.

6. Verwendung des Verfahrens nach einem der Ansprüche 1 bis 3 zur Ermittlung der Position einer aufgetretenen Leitungsstörung bei dem derjenige Netzteilnehmer (2, 3, 4, 5), der aufgrund der Leitungsstörung vom vorangehenden Netzteilnehmer (2, 3, 4, 5) keine Daten mehr empfängt, seine Positionskennzeichnung an den Master (2) meldet.

7. Verwendung des Verfahrens nach einem der Ansprüche 1 bis 3 bei einem stationären Kommunikationssystem.

8. Verwendung des Verfahrens nach einem der Ansprüche 1 bis 3 bei einem mobilen Kommunikationssystem.

## Claims

1. A method for determining the position of a member (2, 3, 4, 5) in a network (1) comprising a ring structure and connecting several members (2, 3, 4, 5) to one another, in which one member (2) is used as the master, whereby at the start of the network operation the master (2) generates a number representing a member position identification and stores it internally, whereupon, starting with the master (2), each network member (3, 4, 5) causes the member (3, 4, 5) directly following in the ring structure to store a number which in each case also represents a member position identification, which is increased by a number N compared with its respective own member position identification until in this manner an individual position identification is allocated to each member (2, 3, 4, 5), and the master, with the knowledge of the structure of the ring-shaped network, can supply each individual member with selective data on the basis of the individual position identifications,
**characterised in that** the data is transmitted unidirectionally between the network members (2, 3, 4, 5) in each case in a predetermined bit group format, whereby during the allocation of the member position identifications the numbers representing the position identifications are in each case transmitted to predetermined bit positions of consecutive bit groups.

2. A method according to Claim 1,
**characterised in that** the number generated by the master (2) at the start of the network operation is equal to zero and the number N is equal to one.

3. A method according to one of the preceding Claims,
**characterised in that** the numbers representing the position identifications are transmitted between consecutive members (2, 3, 4, 5) in data words, whose length is dimensioned so that the largest transferable number corresponds at least to the number of the maximum possible member (2, 3, 4, 5).

4. Use of the method according to one of the preceding Claims for the individual and purposeful addressing of members (2, 3, 4, 5) in a network (1) comprising several physically identical network members (2, 3, 4, 5).

5. Use of the method according to one of Claims 1 to 3 for the individual and purposeful addressing of loudspeaker cabinets in a network comprising several physically identical loudspeaker cabinets and other hi-fi components.

6. Use of the method according to one of Claims 1 to 3 for determining the position of a line fault that has occurred in which the member (2, 3, 4, 5) which no longer receives any data from the preceding member (2, 3, 4, 5) because of the line fault reports its position identification to the master (2).

7. Use of the method according to one of Claims 1 to 3 in a stationary communications system.

8. Use of the method according to one of Claims 1 to 3 in a mobile communications system.

## Revendications

1. Procédé pour déterminer la position d'un participant dans un réseau (2, 3, 4, 5), ce réseau (1) ayant une structure en anneau et reliant plusieurs participants (2, 3, 4, 5),
un participant (2) du réseau selon lequel désigné comme maître (2) générant, au début du fonctionnement du réseau, un nombre représentant une caractéristique de la position d'un participant et enregistrant ce nombre de manière interne, puis, à partir du maître (2), chaque participant du réseau (3, 4, 5) autorise le participant (3, 4, 5) qui suit directement dans la structure en anneau à enregistrer un nombre qui représente également une caractéristique de position de participant, ce nombre étant augmenté d'un nombre N respectivement par rapport à la caractéristique de position de participant propre, jusqu'à ce que de cette manière une caractéristique de position, individuelle, ait été associée à chaque participant (2, 3, 4, 5) du réseau, et que connaissant la structure du réseau en anneau, le maître peut fournir à chaque participant des données sélectives en utilisant les caractéristiques de positions individuelles,
**caractérisé en ce que**
les données sont transmises de manière unidirectionnelle entre les participants (2, 3, 4, 5) du réseau, chaque fois suivant un format de groupes de bits prédéterminés,
et pendant l'attribution des caractéristiques de positions de participant, les nombres qui représentent les caractéristiques de positions de participant sont transmis chaque fois à des groupes de bits qui se succèdent dans des positions de bits prédéterminées.

2. Procédé selon la revendication 1,
**caractérisé en ce que**
le nombre généré par le maître (2), au début du fonctionnement du réseau, est égal à zéro et le nombre N est égal à l'unité.

3. Procédé selon l'une quelconque des revendications précédentes,
**caractérisé en ce que**
les nombres qui représentent les caractéristiques de positions sont transmis entre les participants successifs du réseau (2, 3, 4, 5) dans des mots de données dont la longueur est dimensionnée pour que le plus grand nombre transmissible corresponde au moins au nombre maximum de participants possible (2, 3, 4, 5).

4. Application du procédé selon l'une des revendications précédentes pour solliciter individuellement et de manière précise des participants du réseau (2, 3, 4, 5) dans un réseau (1) ayant plusieurs participants (2, 3, 4, 5) physiquement identiques.

5. Application du procédé selon l'une quelconque des revendications 1 à 3 pour solliciter de manière individuelle et précise des boîtes vocales dans un réseau ayant plusieurs boîtes vocales physiquement identiques et d'autres composants de haute fidélité.

6. Application du procédé selon l'une quelconque des revendications 1 à 3 pour déterminer la position d'une perturbation de ligne produite chez l'un des participants du réseau (2, 3, 4, 5) qui à cause de la perturbation de ligne de participants en amont (2, 3, 4, 5) ne reçoit plus de données et signale sa caractéristique de position au maître (2).

7. Application du procédé selon l'une quelconque des revendications 1 à 3 à un système stationnaire de communication.

8. Application du procédé selon l'une quelconque des revendications 1 à 3 à un système de communication mobile.
